## Europäisches Patentamt

## European Patent Office

## Office européen des brevets

(19)

(11) Numéro de publication: **0 117 185**
**B1**

(12) **FASCICULE DE BREVET EUROPÉEN**

(45) Date de publication du fascicule du brevet:
04.11.87

(51) Int. Cl.⁴: **H 04 J 3/06**

(21) Numéro de dépôt: **84400231.1**

(22) Date de dépôt: **02.02.84**

(54) **Dispositif de démultiplexage de trains numériques.**

(30) Priorité: **08.02.83 FR 8301920**

(43) Date de publication de la demande:
**29.08.84 Bulletin 84/35**

(45) Mention de la délivrance du brevet:
**04.11.87 Bulletin 87/45**

(84) Etats contractants désignés:
**DE FR GB IT**

(56) Documents cité:
**DE-B-1 293 211**
**GB-A-1 069 538**
**US-A-3 472 956**
**US-A-3 959 587**

**CABLES ET TRANSMISSION, vol. 29, no. particulier, décembre 1975, pages 261-265, Paris, FR; Y.MADEC: "II.2.1. - Caractéristiques générales d'un équipement de multiplexage numérique du second ordre TNM 1-2"**

(73) Titulaire: **SAT Société Anonyme de Télécommunications, 41, rue Cantagrel, F-75624 Paris Cedex 13 (FR)**

(72) Inventeur: **Guichard, Jean- Louis Vincent, 41, rue Cantagrel, F-75624 Paris Cédex 13 (FR)**

(74) Mandataire: **Bloch, Robert, 6, rue du Faubourg Saint- Honoré, F-75008 Paris (FR)**

## Description

La présente invention concerne un dispositif de démultiplexage de trains numériques de trames séparées par des mots de verrouillage de trame.

De tels dispositifs s'appliquent en particulier à des démultiplexeurs à haut débit, par exemple à 34 Mbits/s,140 Mbits/s.

Dans des trains numériques multiplexés, les trames sont espacées entre elles par des mots de verrouillage de trame. Une trame peut, par exemple, comprendre quatre secteurs de 96 groupes de 4 éléments binaires. Dans ce cas, le mot de verrouillage de trame associé à chaque trame occupe les 10 premiers bits des trois premiers groupes du premier secteur, deux bits étant en réserve. Démultiplexer, c'est identifier à la réception chacun des trains et chacune des trames; c'est identifier les mots de verrouillage de trame dans les trains reçus.

L'avis G 742 du CCITT recommande, comme mot, ou signal, de verrouillage de trame, le mot 11110110000.

A la réception, il est nécessaire de pouvoir identifier avec certitude un tel mot, sans toutefois perdre trop de temps pour reconnaître et décoder un mot aussi long.

On sait déjà identifier un tel mot de 10 éléments binaires à l'aide d'un dispositif à dix bascules montées en registres.

Cependant, une telle quantité de bascules interdit le démultiplexage du mot sur un composant d'encombrement très faible, comme une puce.

On connaît par ailleurs, par le document DE-B-1 293 211, un dispositif de réception d'un code de synchronisation comportant peu de bascules; mais ce dispositif ne permet pas d'identifier sans risque d'erreur ce code de synchronisation.

La présente invention vise donc à réduire le nombre d'éléments logiques des dispositifs employés jusqu'ici, tout en assurant une identification certaine des mots de verrouillage de trames.

A cet effet, la présente invention concerne un dispositif de démultiplexage de trains numériques de trames séparées par des mots de verrouillage de trame, caractérisé par le fait qu'il comporte des moyens agencés pour identifier une première partie des mots de verrouillage, des moyens pour confirmer et mémoriser cette identification, des moyens agencés pour identifier une deuxième partie des mots de verrouillage, lesdites première et deuxième parties des mots de verrouillage se recouvrant, des moyens pour effacer ladite mémorisation, et des moyens pour confirmer, lors de l'effacement de ladite mémorisation, l'identification de l'ensemble des mots de verrouillage.

Dans une forme de réalisation préférée du dispositif de l'invention, les mots de verrouillage comprennent dix éléments binaires et les moyens d'identification de la première partie des mots de verrouillage comprennent six bascules reliées à une première porte ET, les moyens de confirmation et de mémorisation de cette identification comprennent une septième bascule, les moyens d'identification de la deuxième partie des mots de verrouillage comprennent les cinq premières bascules des moyens d'identification de la première partie des mots et une deuxième porte ET à laquelle elles sont reliées, les moyens d'effacement comprennent une troisième porte ET reliée entre la sixième bascule des moyens d'identification de la première partie des mots de verrouillage et la septième bascule, et les moyens d'identification de l'ensemble des mots de verrouillage comprennent une quatrième porte ET reliée à la septième bascule et à la deuxième porte ET.

Grâce à l'invention, l'identification des mots de verrouillage de trame recommandés par l'avis G 742 du CCITT s'effectue donc avec sept bascules, et non plus dix.

La présente invention sera mieux comprise à l'aide de la description suivante de la forme de réalisation préférée et d'une variante de celle-ci du dispositif de l'invention, an référence aux dessins annexés, sur lesquels:

- la figure 1 représente le schéma logique du dispositif de l'invention;
- la figure 2 représente le diagramme des temps du fonctionnement du dispositif de la figure 1, et
- la figure 3 représente une variante en technologie STL du schéma de la figure 1.

Dans l'exemple décrit ci-dessous, on a considéré, à titre indicatif mais non limitatif, que le mot de verrouillage de trame était le mot 1111010000 recommandé par G 742 du CCITT.

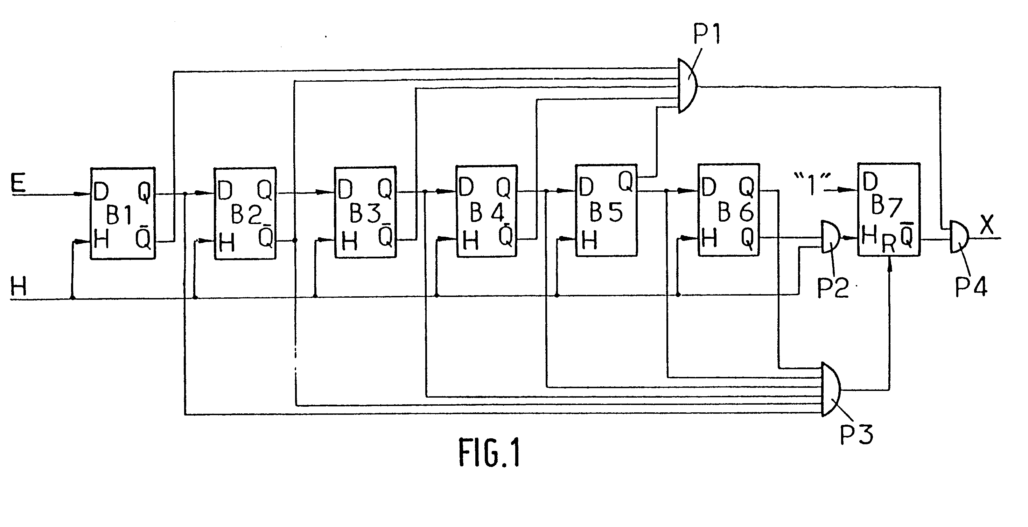

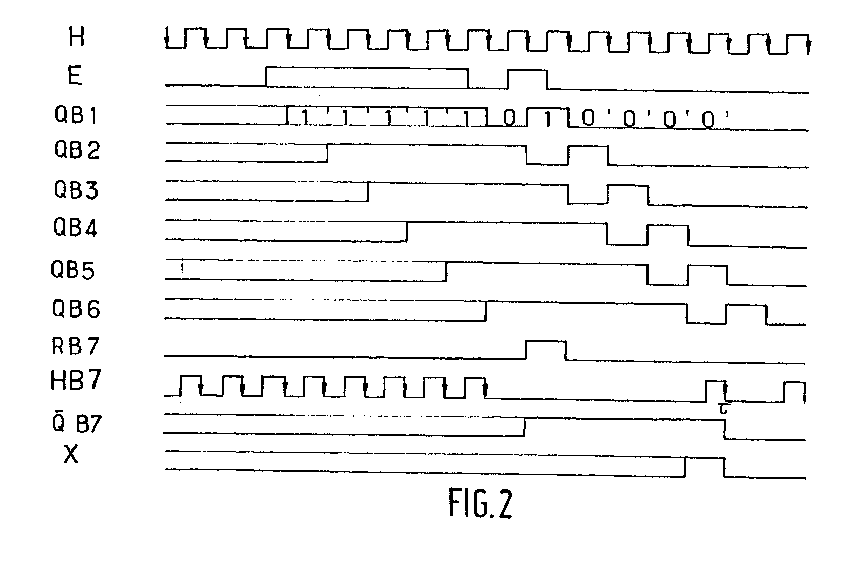

Le dispositif de la figure 1 comporte sept bascules $B_1$-$B_7$, de type D connu (data flip-flop), à deux entrées D et H; elles sont synchronisées par un signal d'horloge binaire de période égale à un temps binaire (figure 2) reçu sur leur entrée H, et possédant une sortie directe Q et une sortie inverseuse $\bar{Q}$. Le signal d'horloge est un signal carré périodique, à l'état 0 sur une demi-période et à l'état 1 sur l'autre demi-période de chaque période. Le signal à la sortie Q des bascules peut être synchronisé aussi bien sur le front montant que sur le front descendant du signal d'horloge, et dans l'exemple considéré, il l'est sur le front descendant, c'est-à-dire qu'au moment de ce front descendant, les signaux en Q et en D sont les mêmes. L'entrée D de la première bascule $B_1$ reçoit le signal binaire E des trains numériques multiplexés dans lesquels il faut reconnaître les mots de verrouillage de trame, et les entrées D des cinq bascules suivantes $B_2$-$B_6$ sont raccordées aux sorties Q des cinq premières bascules $B_1$-$B_5$, respectivement.

Les sorties inverseuses $\bar{Q}$ des quatre premières bascules $B_1$-$B_4$ et la sortie Q de la bascule $B_5$ sont raccordées aux entrées d'une porte ET $P_1$. Les sorties directes Q des bascules $B_1$, $B_3$, $B_4$, $B_5$ et $B_6$ et la sortie inverseuse $\bar{Q}$ de la bascule $B_2$ sont reliées aux entrées d'une porte ET $P_3$. La sortie inverseuse $\bar{Q}$ de la bascule $B_6$ est reliée à une entrée d'une porte ET $P_2$ dont l'autre entrée reçoit le signal d'horloge. L'entrée d'horloge H de la bascule $B_7$ est reliée à la sortie de la porte ET $P_2$ et son autre entrée D reçoit un signal logique 1. La sortie de la porte ET $P_3$ est reliée à l'entrée R de réarmement de la bascule $B_7$. La sortie de la porte ET $P_1$ et la sortie inverseuse de la bascule $B_7$ sont reliées aux entrées d'une porto ET $P_4$.

Examinons maintenant comment fonctionne le dispositif qui vient d'être décrit par sa structure, en référence à la figure 2. Soit H, le signal d'horloge et E le signal binaire reçu sur l'entrée D de la bascule $B_1$: Dans la réalité, on ne sait pas quand commence un mot de verrouillage de trame. Soit le signal E comprenant, après un front de montée, cinq 1, un 0, et un 1 avant un front de descente. Après le premier 1, le lecteur aura reconnu le mot de l'avis G 742 du CCITT.

Posons que, quand on a identifié quatre 1 suivis d'un 0 et d'un 1, on a reconnu que le mot avait commencé. La sortie Q de $B_1$ deviendra identique à E et passera à l'état haut lors du premier front descendant de H suivant le passage a l'état haut de E. C'est ce qui a été représenté par le signal $QB_1$. Au moment du passage à l'état haut de $QB_1$, l'entrée D de $B_2$ voit la sortie $QB_1$, mais celle-ci n'est pas encore à l'état haut. Donc la sortie Q de $B_2$ passera elle à état haut lors du front descendant suivant de H. Et il en est ainsi pour toutes les sorties Q des bascules $B_2$ -$B_6$. En conséquence, les signaux $QB_1$ -$QB_6$ sont les mêmes mais décalés de l'un à l'autre d'un période d'horloge, soit d'un temps binaire.

Quand la sortie de la porte ET $P_3$ - signal $RB_7$ de la figure 2 - est à l'état haut, les signaux $QB_1$, $\bar{Q}B_2$, $QB_3$, $QB_4$, $QB_5$ et $QB_6$ sont aussi à l'état haut. Durant ce temps binaire, les six sorties directes Q des bascules $B_6$, $B_5$ $B_4$, $B_3$, $B_2$, $B_1$ sont respectivement 1, 1, 1, 1, 0, 1, représentant respectivement les six premiers éléments binaires du mot de verrouillage de trame.

Lorsque la sortie directe Q de $B_6$ est à l'état bas, soit 0, sa sortie inverseuse $\bar{Q}$ est à l'état 1, et la sortie de la porte ET $P_2$ reproduis le signal d'horloge H. Au moment ou $RB_7$ passe à l'état haut, $QB_6$ est déjà à l'état haut, c'est-à-dire qu'il n'y a plus de signal d'horloge à l'entrée H de la basculle $B_7$. Donc au moment où le signal $RB_7$ passe à l'état haut, la bascule $B_7$ bascule à l'état haut sur sa sortie inverseuse $\bar{Q}B_7$, en fait grâce à la porte ET $P_3$, et reste dans cet état, qu'on peut appeler état de mémorisation de l'identification des six premiers éléments du mot de vorrouillage, jusqu'à ce que le signal d'horloge réapparaisse à l'entrée H de $B_7$, c'est-à-dire jusqu'à ce que $\bar{Q}B_6$ passe à 1, c'est-à-dire jusqu'à ce que $QB_6$ passe à 0.

La bascule $B_7$, compte-tenu de la structure du signal d'horloge H, rebascule donc à l'état bas sur sa sortie inverseuse lors du front descendant du signal d'horloge suivant le passage à l'état bas de $QB_6$, soit à l'instant α, et la mémorisation s'efface. A cet égard, on peut donc dire que la porte ET $P_2$, qui reçoit le signal $\bar{Q}B_6$, joue un rôle d'effaçage qui permet, en cas de mauvaise détection, de ne pas perturber le dispositif. A

l'instant α encore, les entrées de la porte ET $P_1$ sont respectivement $\bar{Q}B_1$ = 1, $\bar{Q}B_2$ = 1, $\bar{Q}B_3$ = 1, $\bar{Q}B_4$ = 1, $QB_5$ = 1, c'est-à-dire que la porte $P_1$ identifie les états 10000 des sorties directes Q des bascules $B_5$, $B_4$, $B_3$, $B_2$, $B_1$, c'est-à-dire les cinq derniers bits du mot de verrouillage de trame.

En définitive, au moment où la sortie inverseuse de la bascule $B_7$ passe à l'état haut, les six premiers bits du mot de verrouillage de trame sont identifiés, et mémorisés jusqu'au moment où la sortie inverseuse de la bascule $B_7$ rebascule à l'état bas, moment où les cinq derniers bits du mot de verrouillage de trame sont identifiés. En d'autres termes, on peut considérer que le mot de verrouillage comporte une première partie de six bits et une deuxième partie de cinq bits, les deux parties ayant le sixième bit du mot en commun, que l'identification de la première partie est confirmée et mémorisée jusqu'à ce que la seconde partie soit à son tour identifiée. Le recouvrement des deux parties du mot assure la continuité de l'identification qui, sinon, ne le serait pas sans erreur.

La sortie X de la porte ET $P_4$, qui reçoit sur ses entrées, le signal de sortie de la porte ET $P_1$ et le signal de la sortie inverseuse $\bar{Q}$ de la bascule $B_7$, se trouve donc à l'état haut lors du dernier bit du mot de verrouillage et repasse à l'état bas à l'instant α, à la fin du mot de verrouillage. Elle permet donc de confirmer l'identification de l'ensemble du mot de verrouillage de trame.

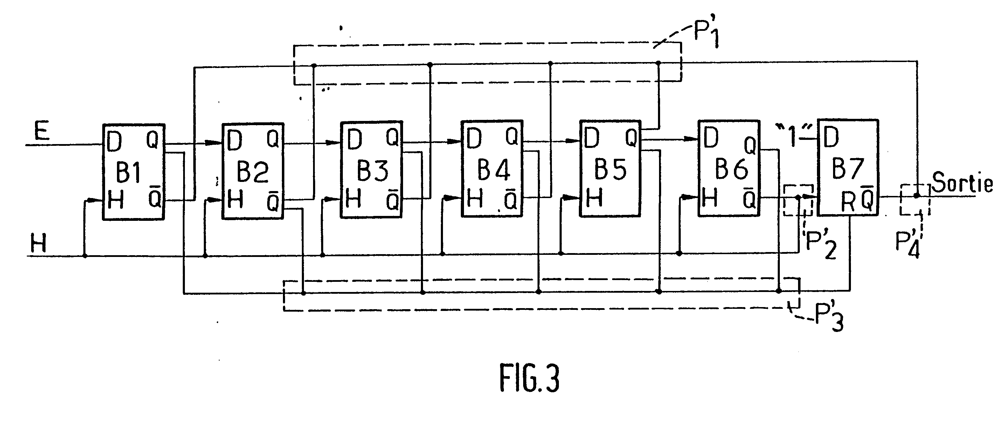

Le disposisif de la figure 3 est tout-à-fait équivalent à celui de la figure 1, à la seule différence près qu'il est réalisé en technologie dite STL (Schottky Transistor Logic) et que les portes ET $P_1$, $P_2$, $P_3$, $P_4$ sont remplacées par des noeuds de courant $P'_1$, $P'_2$, $P'_3$, $P'_4$.

Le dispositif de l'invention pourrait être realisé en tout autre technologie favorisant en particulier l'intégration.

De façon générale, le dispositif de l'invention pourrait permettre l'identification de mots de verrouillage de trame autres que celui recommandé par l'avis G 742 du CCITT. Ainsi si ‗ ces mots comportent un nombre pair 2n d'éléments binaires, le dispositif de l'invention comporte n+2 bascules en cascade, les (n+1) premières étant reliées aux entrées d'une première porte ET agencée pour identifier les (n+1) premiers éléments binaires du mot de verrouillage, la bascule d'ordre (n+2) confirmant et mémorisant cette identification, les n premières bascules étant reliées sur entrees d'une deuxième porte ET agencée pour identifier les n derniers éléments binaires du mot, une troisième porte ET, reliée entre les bascules d'ordres (n+1) et (n+2), étant agencée pour effacer ladite mémorisation, eu la bascule d'ordre (n+2) de la deuxième porte ET étant reliées aux entrées d'une quatrième porte ET agencée pour confirmer, lors de l'effacement de ladite mémorisation, l'identification du mot de verrouillage de trame dans son ensemble. Par contre, si ces mots comportent un nombre impair $(2p+1)$ d'éléments binaires le dispositif de l'invention comporte $(p+2)$ basculas en cascade, les $(p+1)$ premières étant reliées aux entrées d'une première porte ET agencée pour identifier les $(p+1)$ premiers éléments binaires du mot de verrouillage, la bascule d'ordre $(p+2)$ confirmant et mémorisant cette identification, les $(p+1)$ premières bascules étant reliées aux entrées d'une deuxième porte ET agencée pour identifier les $(p+1)$ derniers éléments binaires du mot, une troisième porte ET, reliée entre les bascules d'ordres $(p+1)$ et $(p+2)$, étant agencée pour effacer ladite mémorisation, et la bascule d'ordre $(p+2)$ et la deuxième porte ET étant reliées aux entrées d'une quatrième porte ET agencée pour confirmer, lors de l'effacement de ladite mémorisation, l'identification du mot de verrouillage de trame dans son ensemble.

## Revendications

1. Dispositif de démultiplexage de trains numériques de trames séparées par des mots de verrouillage de trame, caractérisé par le fait qu'il comporte des moyens $(B_1-B_6, p_3)$ agencés pour identifier une première partie des mots de verrouillage, des moyens $(B_7)$, raccordés à la sortie des moyens d'identification de la première partie des mots de verrouillage, pour confirmer et mémoriser cette identification, des moyens $(B_1-B_5, P_1)$ agencés pour identifier une deuxième partie des mots de verrouillage, lesdites première et deuxième parties des mots de verrouillage se recouvrant, des moyens $(P_2)$, raccordés entre les moyens d'identification de le première partie des mots de verrouillage et les moyens de confirmation et de mémorisation, pour effacer ladite mémorisation, et des moyens $(B_7, P_1, P_4)$ raccordés à le sortie des moyens d'identification de la deuxième partie des mots de verrouillage et à la sortie des moyens de confirmation et de mémorisation pour confirmer, lors de l'effacement de ledite mémorisation, l'identification de l'ensemble des mots de verrouillage.

2. Dispositif selon le revendication 1, caractérisé par le ffait que les mots de verrouillage comprennent dix éléments binaires et les moyens d'identification de la première partie des mots de verrouillage comprennent six bascules $(B_1 - B_6)$ reliées à une première porte ET $(P_3)$, les moyens de confirmation et de mémorisation de cette identification comprennent une septième bascule $(B_7)$, les moyens d'identification de la deuxième partie des mots de verrouillage comprennent les cinq premières bascules $(B_1 - B_5)$ des moyens d'identification de la première partie des mots et une deuxième porte ET $(P_1)$ à lequelle elles sont reliées, les moyens d'effacement comprennent une troisième porte ET $(P_2)$ reliée entre le sixième bascule $(B_6)$ des moyens d'identification de la première partie des mots de verrouillage et la septième bescule $(B_7)$, et les moyens d'identification de l'ensemble des mots de verrouillage comprennent une quatrième porte ET $(P_4)$ reliée à la septième bascule $(B_7)$ et à la deuxième porte ET $(P_1)$.

3. Dispositif selon la revendication 2, caractérisé par le fait que les mots de verrouillage sont 1111010000, la première porte ET $(P_3)$ est reliée respectivement aux sorties directes de la première bascule $(B_1)$ et des trois dernières bascules $(B_3 - B_5)$ et à la sortie inverseuse de la deuxième bascule $(B_2)$ du groupe de bascules d'identification de la première partie des mots de verrouillage et la deuxième porte ET $(P_1)$ est reliée respectivement aux sorties inverseuses des quatre premières bascules $(B_1 - B_4)$ et à la sortie directe de la cinquième bascule $(B_5)$ du groupe d'identification de la deuxième partie des mots de verrouillage.

4. Dispositif selon l'une des revendications 2 et 4 caractérisé par le fait que lesdites bascules $(B_1 - B_7)$ sont des bascules de type D.

5. Dispositif selon la revendication 1, caractérisé par le fait que lesdits moyens d'identification de la première partie et de la dexième partie des mots de verrouillage et lesdits moyens de confirmation et de mémorisation comprennent des bascules de type STL.

## Patentansprüche

1. Einrichtung zur Demultiplexen von numerischen Folgen von Rahmen, die durch Rahmenverriegelungswörter voneinander getrennt sind, dadurch gekennzeichnet, daß sie Glieder $(B_1 - B_6, P_3)$, die in der Lage sind, einen ersten Teil der Verriegelungswörter zu identifizieren, ein Glied $(B_7)$, das an den Ausgang der Identifizierungsglieder für den ersten Teil der Verriegelungswörter angeschlossen ist, um diese Identifizierung zu bestätigen und zu speichern, Glieder $(B_1 - B_5, P_1)$, die in der Lage sind, einen zweiten Teil der Verriegelungswörter zu identifizieren, wobei die ersten und zweiten Teile der Verriegelungswörter sich überlappen, ein Glied $(P_2)$, das zwischen die Identifizierungsglieder für den ersten Teil der Verriegelungswörter und das Bestätigungs- und Sperrglied zwischengeschaltet ist, um die Speicherung zu löechen, und Glieder $(B_7, P_1, P_4)$ umfaßt, die an den Ausgang der Identifizierungsglieder für den zweiten Teil der Verriegelungswörter und an den Ausgang des Bestätigungs- und Speichergliedes angeschlossen sind, um bei Löschung des Speichers die Identifizierung der Gesamtheit der Verriegelungswörter zu bestätigen.

2. Einrichtung nach Anspruch 1, dadurch gekennzeichnet daß die Verriegelungswörter zehn Binärelemente enthalten, daß die Identifizierungsglieder für den ersten Teil der Verriegelungswörter sechs Flip-Flops ($B_1$ - $B_6$) aufweisen, die an ein UND-Gatter ($P_3$) angeschlossen sind, daß das Bestätigungs- und Speichergleid für diese Identifizierung ein siebentes Flip-Flop ($B_7$) enthält, daß die Identifizierungsglieder für den zweiten Teil der Verriegelungswörter die fünf ersten Flip-Flops ($B_1$ - $B_5$) der Identifizierungsglieder für den ersten Teil der Wörter und ein zweites UND-Gatter ($P_1$) aufweisen, an welches sie angeschlossen sind, daß das Löschglied ein drittes UND-Gatter ($P_2$) enthält, das zwischen das sechste Flip-Flop ($B_6$) der Identifizierungsglieder für den ersten Teil der Verriegelungswörter und das siebente Flip-Flop ($B_7$) geschaltet ist, und daß die Identifizierungsglieder für die Gesamtheit der Verriegelungswörter ein viertes UND-Gatter ($P_4$) enthalten, das an das siebente Flip-Flop ($B_7$) und das zweite UND-Gatter ($P_1$) angeschlossen ist.

3. Einrichtung nach Anspruch 2, dadurch gekennzeichnet, daß die Verriegelungswörter die Form 1111010000 aufweisen, daß das erste UND-Gatter ($P_3$) jeweils angeschlossen ist an die Direktausgänge des ersten Flip-Flops ($B_1$) und der drei letzten Flip-Flops ($B_3$ - $B_5$) und den inversen Ausgang des zweiten Flip-Flops ($B_2$) der Gruppe von Identifizierungs-Flip-Flops für den ersten Teil der Verriegelungswörter, und daß das zweite UND-Gatter ($P_1$) jeweils angeschlossen ist an die inversen Ausgänge der vier ersten Flip-Flops ($B_1$ - $B_4$) und den Direktausgang des fünften Flip-Flops ($B_5$) der Identifizierungsgruppe für den zweiten Teil der Verriegelungswörter.

4. Einrichtung nach einem der Ansprüche 2 und 3, dadurch gekennzeichnet, daß die Flip-Flops ($B_1$ - $B_7$) Flip-Flops vom Typ D sind.

5. Einrichtung nach Anspruch 1, dadurch gekennzeichnet, daß die Identifizierungsglieder für den ersten Teil und den zweiten Teil der Verriegelungswörter und das Bestätigungs- und Speicherglied Flip-Flops vom Typ STL umfassen.

## Claims

1. Device for demultiplexing digital trains of frames separated by frame locking words, characterized in that comprises means ($B_1$ - $B_6$) arranged for identifying a first part of said locking words, means ($B_7$), connected to the output of the means for identifying the first part of the locking words, for confirming and memorizing this identification, means ($B_1$ - $B_5$ - $P_1$) arranged for identifying a second part of said locking words, said first and second parts of said locking words overlapping, means ($P_2$), connected between the means for identifying the first part of said locking words and the confirmation and memorization means, for erasing said memorization, and means ($B_7$, $P_1$, $P_4$) connected to the output of the means for identifying the second part of said locking words and to the output of the confirmation and memorization means for confirming, upon erasure of said memorisation, the identification of the entirety of said locking words.

2. Device of claim 1, characterized in that the locking words comprise ten binary elements and the means for identifying the first part of said locking words comprise six flip flops ($B_1$ - $B_6$) connected to a first and gate ($P_3$), the means for confirming and memorizing this identification comprise a seventh flip flop ($B_7$), the means for identifying the second part of said locking words comprise the first five flip flops ($B_1$ - $B_5$) of the means for identifying the first part of said locking words and a second and gate ($P_1$) to which they are connected, the erasure means comprise a third and gate ($P_2$) connected between the sixth flip flop ($B_6$) of the means for identifying said first part of said locking words and the seventh flip flop ($B_7$) and the means for identifying the entirety of said locking words comprise a fourth AND gate ($P_4$) connected to the seventh flip flop ($B_7$) and to the second AND gate ($P_1$).

3. Device of claim 2, characterized in that the locking words are 1111010000, the first AND gate ($P_3$) is connected respectively to the direct outputs of the first flip flop ($B_1$) and of the last three flip flops ($B_3$ - $B_5$) and to the inverter output of the second flip flop ($B_2$) of the group of flip flops for identifying the first part of said locking words and the second AND gate ($P_1$) is connected respectively to the inverter outputs of the first four flip flops ($B_1$ - $B_4$) and to the direct output of the fifth flip flop ($B_5$) of the group identifying the second part of said locking words.

4. Device of one of claims 2 and 3, characterized in that said flip flops ($B_1$ - $B_7$) are flip flops of type D.

5. Device of claim 1, characterized in that said means for identifying the first part and the second part of said locking words and said confirmation and memorization means comprise flip flops of STL type.

FIG.1

FIG.2

FIG.3